# EUROPEAN PATENT APPLICATION

(11) **EP 2 503 485 A2**
(43) Date of publication of application: **26.09.2012**
(21) Application number: 12173293.7
(22) Date of filing: 11.12.2002
(51) Int. Cl.: G06F 21/24

(54) **Managing file access via a designated storage area**

(30) Priority: 12.12.2001 US 339634 P; 12.02.2002 US 74804; 27.09.2002 US 259078
(62) Divisional of application: 02258529.3
(71) Applicant: Guardian Data Storage, LLC, Wilmington, DE 19808 (US)
(72) Inventor: Ouye, Michael Michio, Mountain View, CA 94040 (US); Rossman, Alain, Menlo Park, CA 94025 (US); Garcia, Denis Jacques Paul, Palo Alto, CA 94306 (US); Crocker, Steven Toye, Redwood City, CA 94061 (US); Ryan, Nicholas Michael, Menlo Park, CA 94025 (US); Gilbertson, Eric, Menlo Park, CA 94025 (US); Huang, Weiqing, Flower Mound, TX 75022 (US); Vainstein, Klimenty, Morgan Hill, CA 95037-9518 (US); Humpich, Serge, Menlo Park, CA 94025 (US)
(74) Representative: Carpmaels & Ransford

(57) **Abstract**

The present invention relates to techniques for managing access to digital assets via a designated place or its sub-places. The designated place may be a file folder, a directory, a local or remote store. The designated place is characterized by or associated with a securing module that causes all files stored in the designated place to have substantially similar security. In other words, a file to be secured can be simply dropped into the designated place and the securing module is configured to take actions to secure the file transparently in accordance with the security characteristics of the designated place. Likewise, a designated place can be set up to unsecure the secured files being deposited in the designated place, provided a user of the secured files is permitted to do so.

## Description

The present invention relates to the area of protecting electronic data in an enterprise environment, and more particularly, relates to techniques for securing digital assets via a designated place and method therefor.

Attacks on e-businesses by hackers might grab newspaper headlines, but the costliest crimes, and the most difficult ones to prevent, are likely to be committed by internal hackers with inside knowledge. Examples of the internal hackers may be among departing employees and contractors who have acquired extensive knowledge about an enterprise and could break into its internal networks, accessing files and folders containing information confidential to the enterprise.

Many businesses and organizations have been looking for effective ways to protect their proprietary information. Typically, businesses and organizations have deployed firewalls, Virtual Private Networks (VPNs), and Intrusion Detection Systems (IDS) to provide protection. Unfortunately, these various security means have been proven insufficient to reliably protect proprietary information residing on its internal networks. For example, depending on passwords to access sensitive documents from within often causes security breaches when the password of a few characters long is leaked or detected.

One of the ongoing efforts in protecting the proprietary information is to use one or more cryptographic, techniques to secure the sensitive documents. Using an encryption process in a cryptographic technique, one party can protect the contents of the data from access by an unauthorized third party, yet the intended party can read the data using a corresponding decryption process. The whole point of cryptography is to keep the contents of the data or plaintext as secret as possible from eavesdroppers. However, the cryptographic approaches (e.g., Pretty Good Privacy or PGP) have revealed some limitations in certain applications. For example, in a collaborative environment in which there are multiple users who need to access an encrypted file from various locations, the distribution of the keys used in the cryptographic approaches become difficult, often requiring sophisticated key management. In addition, some cryptographic approaches require an explicit encryption process. For example, a PGP application needs to be activated manually to encrypt documents to be protected.

Therefore, there is a need to provide flexible ways to secure and protect digital assets at all times.

The present invention is related to processes, systems, architectures and software products for providing pervasive security to digital assets at all times and is particularly suitable in an enterprise environment. To provide efficient ways to secure files or unsecure secured files and manage secured files of different security levels, techniques are disclosed herein to designate one or more stores to secure various files. The stores can be file folders, directories, local or remote storage spaces and are typically managed through a server or a local machine if the stores are user-managed. As a result, through the respective designated stores, files can be secured and secured files can be managed efficiently and consistently. In many cases, the operation of securing the files via a designated store is transparent to users.

According to one aspect of the present invention, a designated store is associated with an access control module that is configured to perform securing operations when a file is deposited into the store. Inherently, a security template comprising predetermined security information is associated with the store. In one embodiment, the securing operations include retrieving the security information from the template and embedding the security information in a header that is integrated with or attached to the file in an encrypted form. Thus the header provides restrictive access to the file.

According to another aspect of the present invention, an access control module is configured to perform unsecuring operations in a designated store. In other words, the store is designated to unseal or unsecure a secured file. When a secured file is attempted to be converted to a regular or plain file, the secured file can be dropped in the store. As a result, all security means embedded in the secured file will be removed and the data is decrypted back to its original state, provided that a user attempting to do so has sufficient privilege.

According to still another aspect of the present invention, when a file is deposited in a store for being secured, the access privilege of a user who performs the deposition of the file is always preserved, thus to prevent the situation in which the user has lost his/her/its ownership (e.g., full access privilege) once the file is secured in accordance with the security settings designated to the store. If the security settings do not permit the user to access files secured in the store, the access control module is configured to add an exception for the user to the security in the header according to one embodiment. Such exception is removed once the ownership changes.

According to yet still another aspect of the present invention, when a secured file is deposited in a store for being secured, "new" security for the resultant secured file effects, provided that the user who attempts to revise the "old" security in the secured file is privileged to do so. Depending on implementation, the old security information is overwritten or superseded by the new security. When the old security information is superseded by the new security information, the old security information is not immediately lost, instead, displaced in a temporary place (e.g., a stack). As a result, an "undo" mechanism is provided.

According to yet still another aspect of the present invention, the designated stores are classified into what are called herein system-managed stores and user-managed stores. As the name suggests, the system-managed stores are managed by a server machine (i.e., a computing device providing centralized access management), and the user-managed stores are locally created in a local machine and managed by a corresponding individual user. The operations of the user-managed stores are similar to those system-managed stores except that they can be accessed by the user without the user or the local machine being authenticated with the server machine first, while none of the system-managed stores can be accessed without the user or a local machine being authenticated first by the server machine. Optionally, branching or child-stores in a designated "parent" store may be created or managed to satisfy certain needs. Regardless the parent store is system-managed or user-managed, the security policies for the child-stores are generally more restrictive.

According to yet still another aspect of the present invention, a security change pertaining to a designated store can be propagated to the designated store and secured files, if there are any in the store, by what is referred to as a crawling method. In the case in which the security change is initiated in a server machine, the change is included in a crawler or spider that is released to a machine hosting the affected store. The spider updates, in addition to the security template associated with the store, each of the secured files automatically. As a result, all existing secured files are up to date with the security change and all files that are deposited in the store are secured in accordance with the updated security template.

Depending on implementation and application, the present invention may be implemented or employed in a client machine and/or a server machine or in a distributed manner. In one embodiment, the present invention is a method for securing files in a store, the method comprises associating a security template with the store, retrieving the security template when a file is deposited in the store, encrypting the file in accordance with the security template to produce an encrypted data portion, generating a header to include security information from the security template, and integrating the header with the encrypted data portion to produce a secured file.

In another embodiment, the present invention is a method for securing files in a store, the method comprises associating a security template with the store, retrieving the security template when a secured file is deposited in the store by a user, wherein the secured file includes a header and an encrypted data portion, the header including embedded security information controlling restrictive access to the encrypted data portion, evaluating the embedded security information from the header of the secured file against access privilege of the user to determine whether the user is permitted to revise the embedded security information of the secured file, and superseding the embedded security information with current security information from the security template after the user is determined to be permitted to revise the embedded security information of the secured file. To provide a possible "undo" operation, the superseding of the embedded security information with the current security information comprises preserving the embedded security information in a temporary place, and replacing the embedded security information in the header of the secured file with the current security information.

In still another embodiment, the present invention is a method for securing files in a store, the method comprises associating a security template with the store, retrieving the security template when a secured file is deposited in the store by a user, wherein the secured file includes a header and an encrypted data portion, the header including embedded security information controlling restrictive access to the encrypted data portion, evaluating the embedded security information from the header of the secured file against access privilege of the user to determine whether the user is permitted to revise the embedded security information of the secured file, and after the user is determined to be permitted to revise the embedded security information of the secured file, evaluating current security information in the template to determine whether the user is permitted to access files in the store, after the user is determined not to be permitted to access the files in the store, adding a special access policy to the security information to be included in the header such that the user can still access the secured file secured in accordance with the security template associated with the store.

It can be appreciated by those skilled in the art that the above exemplary implementations can also be implemented as a system, an apparatus and a software product. There are numerous advantageous, benefits, and features of providing designated places for securing or unsecuring files. One of them is a mechanism, contemplated in the present invention, capable of securing files efficiently, consistently and transparently to users. Another one is that secured digital assets can be more effectively managed through respective designated places, each having its own predefined access policy.

Objects, features, and advantages of the present invention will become apparent upon examining the following detailed description of an embodiment thereof, taken in conjunction with the attached drawings.

These and other features, aspects, and advantages of the present invention will become better understood with regard to the following description, appended claims, and accompanying drawings where:
FIG. 1A shows a configuration of employing a designated store to secure a plain file according to one aspect of the present invention;
FIG. 1B shows a configuration of employing a designated store to unsecure a secured file according to one aspect of the present invention;
FIG. 2A shows an access control module managing a plurality of stores, each of the stores is for securing files in accordance with a different access policy;
FIG. 2B shows an exemplary structure for security information in a security template associate with a designated store.
FIG. 2C shows an example of access rights expressed in XACML;
FIG. 3A shows a process flowchart for securing a file in a designated store according to one embodiment of the present invention;
FIG. 3B shows an exemplary data structure of a secured file produced via a protected store;
FIG. 3C shows an exemplary header structure of a secured file according to one embodiment of the present invention;
FIG. 4A shows a process flowchart of securing a file that can be plain or secured;
FIG. 4B illustrates how an existing security information is being superseded according to one embodiment of the present invention and may be implemented as a block in FIG. 4A;
FIG. 5A shows a basic security system in which the present invention may be practised in accordance with one embodiment thereof;
FIG. 5B shows an exemplary graphic user interface that can facilitate a system operator to create a desired store or view/modify characteristics of an existing store;
FIG. 6A shows a flowchart of a user authentication process that may be implemented in a server machine;
FIG. 6B shows an exemplary folder layout according to one aspect of the present invention;
FIG. 6C shows a flowchart of removing security in a secured file deposited in a special store;
FIG. 6D shows sub-stores or child-stores are created under a designated store,
FIG. 6E shows a process flowchart of creating child-stores under a parent store according to one embodiment of the present invention;
FIG. 7A shows a process flowchart of delivering changes pertaining to designated stores; and
FIG. 7B illustrates that an update patch (e.g., carried in a spider or pushed from a central server) is being propagated into an affected store associated with a security template and including a secured file.

Broadly speaking, the present invention pertains to techniques for securing digital assets via a designated place that may be a file folder, a directory, a local or remote store. The designated place is characterized by or associated with a securing module that causes all files stored in the designated place to have substantially similar security. In other words, a file to be secured can be simply dropped into the designated place and the securing module is configured to take actions to secure the file transparently in accordance with the security characteristics of the designated place. Likewise, a designated place can be set up to unsecure the secured files being deposited in the designated place, provided a user of the secured files has the privilege to do so. There are numerous advantageous, benefits, and features of providing designated places for securing or unsecuring files. One of them is a mechanism, contemplated in the present invention, capable of securing files efficiently, consistently and transparently to users. Another one is that secured digital assets can be more effectively managed through respective designated places, each having its own predefined access policy. Other advantageous, benefits, and features in the present invention can be readily appreciated by those skilled in the art from the detailed description of the invention provided herein.

In the following description, numerous specific details are set forth in order to provide a thorough understanding of the present invention. However, it will become obvious to those skilled in the art that the present invention may be practised without these specific details. The description and representation herein are the common means used by those experienced or skilled in the art to most effectively convey the substance of their work to others skilled in the art. In other instances, well-known methods, procedures, components, and circuitry have not been described in detail to avoid unnecessarily obscuring aspects of the present invention. Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments mutually exclusive of other embodiments. Further, the order of blocks in process flowcharts or diagrams representing one or more embodiments of the invention do not inherently indicate any particular order nor imply any limitations in the invention.

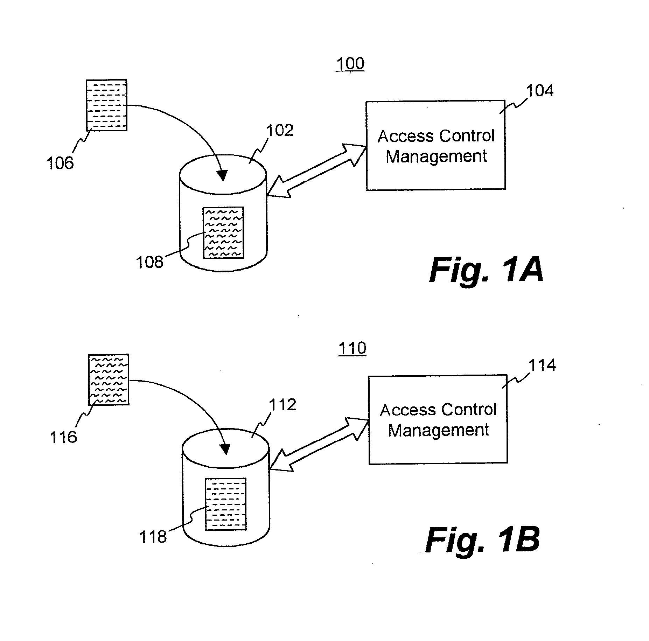

Embodiments of the present invention are discussed herein with reference to FIGS. 1-7B, in which like numerals refer to like parts throughout the several views. However, those skilled in the art will readily appreciate that the detailed description given herein with respect to these figures is for explanatory purposes as the invention extends beyond these limited embodiments.

Generally, a content created by a creator for the purpose of an entity is an intellectual property belonging to the creator or the entity. In an enterprise, any kind of information or intellectual property can be content, though it is commonly referred to as "information" instead of "content". In either case, content or information is independent of its format, it may be in a printout or an electronic document. As used herein, content or information exists in a type of electronic data that is also referred to as a digital asset or simply a file. A representation of a file may include, but not be limited to, various types of documents, multimedia files, streaming data, dynamic or static data, executable code, images and texts.

To prevent content in electronic data from unauthorized access, the electronic data is typically stored in a form that is as close to impossible as possible to read without *a priori* knowledge. Its purpose is to ensure privacy by keeping the content hidden from anyone for whom it is not intended, even those who have access to the electronic data. Example of *a priori* knowledge may include, but not be limited to, a password, a secret phrase, biometric information or one or more keys. However, on the other end, relying solely upon *a priori* knowledge to guard a system or a secured file is not always secure. For example, when a password or a secret phrase is leaked to or hacked by an intruder, the security of a system or a secured file can be breached. Likewise, using encryption of the electronic data (e.g., PGP) can introduce many inconveniences in a collaborative environment.

FIG. 1A shows a configuration 100 according to one aspect of the present invention. Configuration 100 includes a protected store 102 for securing files in a convenient, manageable, and consistent manner. Depending on implementation, the store 102 can be a file folder, a directory, a remote or local storage space for storing and/or securing various types of electronic data or files. In other words, the files in store 102 are secured and will remain secured even if they are moved to other locations and can only be accessed by authorized users. According to one feature of the store 102, a plain file 106 can be secured by simply being deposited into the store 102. As a result, a secured version 108 of the plain file 106 is produced.

According to one embodiment, the store 102 is inherently associated with an access control management 104 that can be implemented a software module. Access control management 104 is activated when a file is attempted in store 102. As used herein, an "attempting" of a file may mean that a file is being deposited into, accessed in or removed out of the store 102. When the file 108 is accessed (e.g., to be opened, printed or attached to an email), the access control management 104 is configured to determine if a requestor or user attempting the file 108 has sufficient access privilege to do so before the file is released. Unless specifically stated differently, a user or a requestor is interchangeably used herein to identify a human user, a software agent, or a group of users and/or software agents. Besides a human user who needs to access a secured document, a software application or agent sometimes needs to access the secured document in order to proceed forward.

FIG. 1B shows a configuration 110 according to another aspect of the present invention. Configuration 110 includes a "special" store 112 for unsecuring any secured files that are being deposited therein. In order words, a secured file 116 can become a regular or plain file 118 after it is dropped into the store 112. Similar to the store 102, the store 112 is inherently associated with an access control management 110 that is configured to strip off any security means embedded in a secured file being deposited therein, provided that the user of the secured file has the privilege to do so.

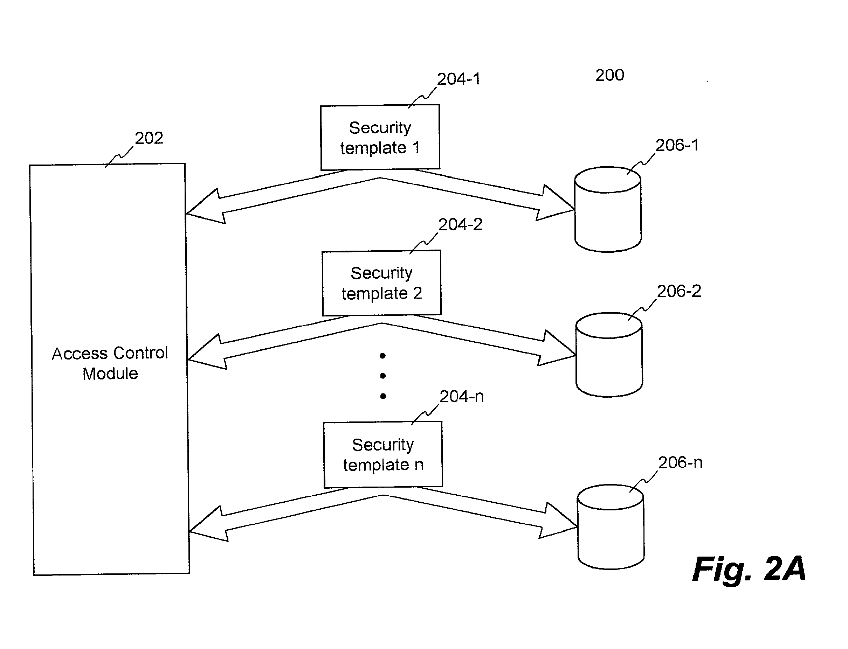

FIG. 2A shows an access control module 202 managing a plurality of stores 206-1, 206-2, ... 206-n. Each of the stores 206 is for securing files in accordance with a different access policy. For example, the store 206-1 is configured for an engineering group such that every member in the group may access the files in the store 206-1 while the store 206-2 is configured for a marketing group such that every member in the marketing group may access the files in the store 206-2. Likewise, the store 206-n may be configured to allow some in one group and others in another group to access files secured therein. In any case, depending on implementation, various access security needs can be achieved through one or more of the stores 206.

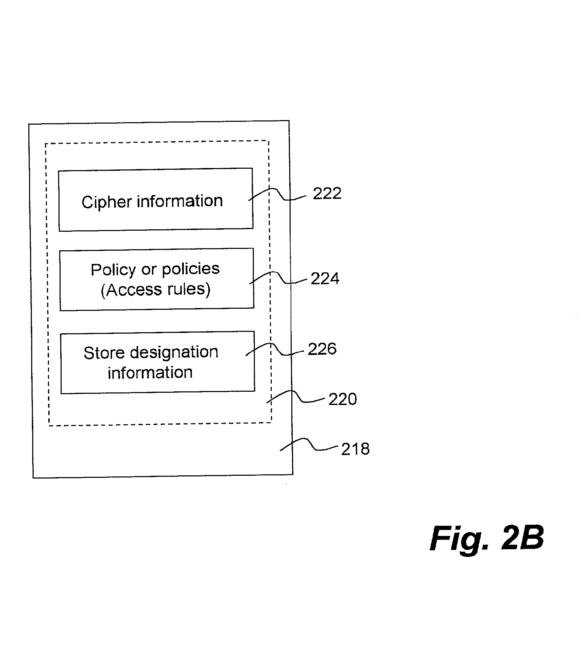

Under the management of access control module 202, each of stores 206 is associated with one of the security templates 204. A security template, as will be further illustrated and explained below, contains essential security information and various parameters designated for a folder and may be in one or more files or in one or more system policies. Depending on implementation, the security information contains one or more access policies (e.g., who, how, when or where the secured files in the store can be accessed), cipher information and other security related information. FIG. 2B shows an exemplary structure for the security information 220 in a security template 218. The security information 220 includes cipher information 222, access policy 224 and store designation information 226. In general, the cipher information 222 indicates what cipher scheme (e.g., Data Encryption Standard algorithm, Blowfish block cipher and Twofish cipher) is employed to encrypt the original plain file and, perhaps, how the plain file is encrypted. Access policy 224 is a set of access rules providing restrictive access to a key(s) and/or the encrypted data. The store designation information 226 indicates how the store is designated, for example, a store created and managed by a server versus a store created by a user for local use. It can be appreciated by those skilled in the art that the security template 218 may be designed differently depending on an actual deployment of a security system. Various types of information can be added in a security template that includes at least one access policy in the context of the present invention.

In general, a security template is stored in a tamper-proof storage place in a client machine (e.g., a desktop computer, a laptop computer or any computing device) and becomes readily available after the user of the client machine is authenticated. For example, the store 206-1 is associated with the template 204-1 while the store 206-n is associated with the security template 204-n. In operations, when a plain file is deposited in the store 206-n, the corresponding security template 204-n is retrieved and a part or all of the corresponding security template 204-n is included in a header that is subsequently attached to or integrated with an encrypted version of the file, wherein the security information in the header provides restrictive access to the encrypted version of the file.

A portion of the security information in a security template is, or can generate, an access policy or policies. A policy, possibly parameterized, is a set of rights determining whether an access request from a requestor is to be granted. According to one embodiment, the rights can be expressed in a descriptive language (understandable literally), such as a markup language and a text file. Examples of the markup language may include, but not be limited to, HTML, XML, WML, and SGML. In a preferred embodiment, the markup language is Extensible Access Control Markup Language (XACML) that is essentially an XML specification for expressing policies for information access. In general, XACML can address fine grained control of authorized activities, the effect of characteristics of the access requestor, the protocol over which the request is made, authorization based on classes of activities, and content introspection (i.e., authorization based on both the requestor and attribute values within the target where the values of the attributes may not be known to the policy writer). In addition, XACML can suggest a policy authorization model to guide implementers of the authorization mechanism.

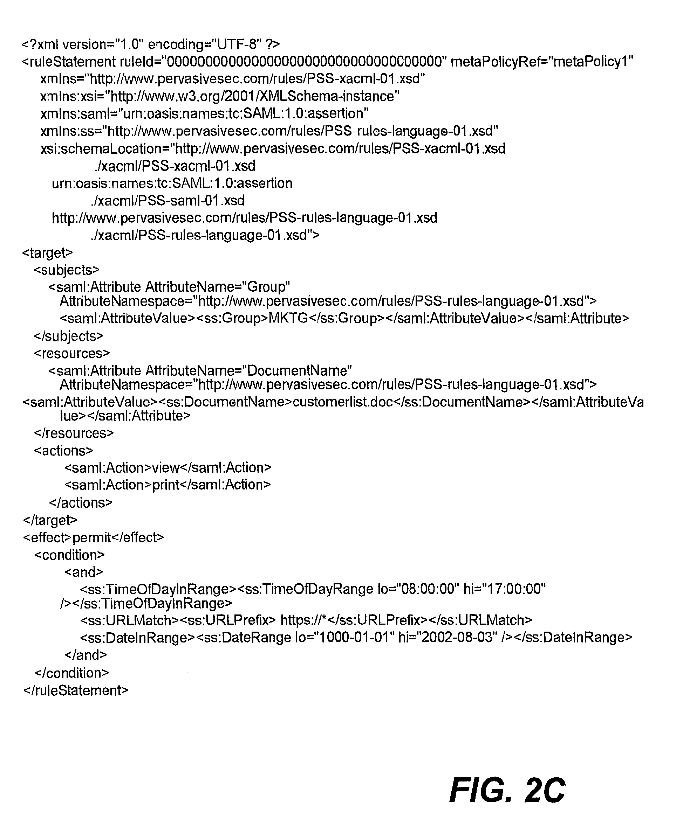

A simplified example 230 of access rights expressed in a language similar to XACML is provided in FIG. 2C. The literal meaning of the above example may be interpreted as "a secured file called customertist.doc created by ACCTG (accounting group), can be VIEWed and PRINTed by MKTG (marketing group), on the condition that this document can be accessed over secured HTTP, accessed before 5:00 PM in the day, before August 3, 2002."

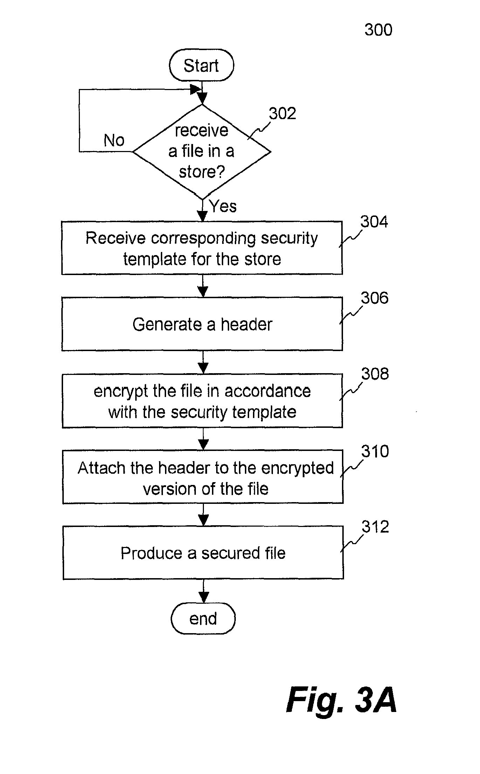

FIG. 3A shows a process flowchart 300 for securing a file in a store according to one embodiment of the present invention. The file can be any type of electronic data (e.g., xyz.doc and abc.pdf) and the store may correspond to the store 102 of FIG. 1A. At 302, the process 302 determines if there is any file being deposited in the store and proceeds once it is detected that a file has been placed into the store. At 304, a security template associated with the store is retrieved. The security template may be obtained directly from a storage space, recovered or decrypted from a secured version thereof or generated in real time in accordance with the settings for the store.

Once the security template is readily available, a header is generated for the file at 306. In essence, the header includes a portion or whole of the security template. At 308, the deposited file is encrypted in accordance with a cipher scheme in the security template. The header is then attached to or integrated to the file at 310 such that any attempt to the file is now regulated by the security information in the header. Subsequently, a secured file is produced at 312 and can only be accessed by authorized users.

According to one embodiment, the plain file being deposited in the store is first encrypted in accordance with a cipher scheme in the security template. A cipher key (e.g., a decryption key) is then stored in and guarded by the access rules in the header, and at least part of the header is encrypted by a separate key. When a request from a user to access the secured file, the access rules in the security information of the header will be measured against the access privilege of the user. If the access privilege of the user is met within the access policy, the access request is granted and the user can thus access the secured file, otherwise, the access is denied. U. S. Patent Application No.:10/074,804 provides an additional description of accessing a secured file.

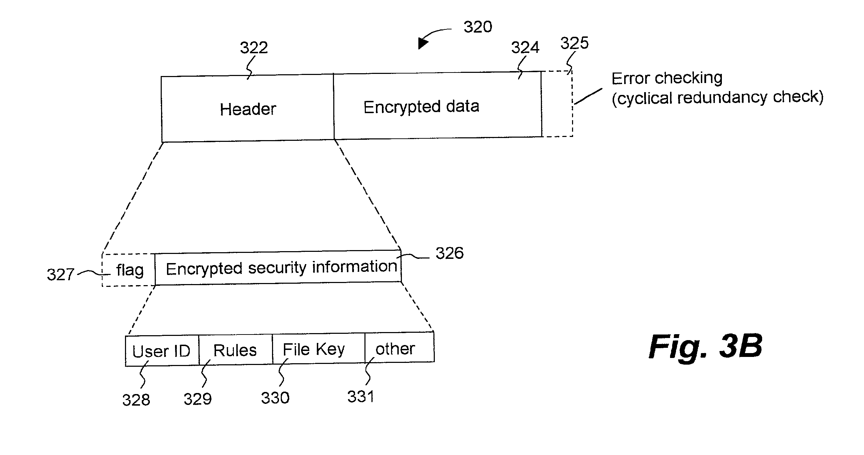

FIG. 3B shows an exemplary data structure 320 of a secured file produced via a protected store. The data structure 320 includes two portions: a header (or header portion) 322 and encrypted data (or an encrypted data portion) 324. The header 322 can be generated in accordance with a security template associated with the store and thus provides restrictive access to the data portion 324 that is an encrypted version of a plain file. Optionally, the data structure 320 may also include an error-checking portion 325 that stores one or more error-checking codes, for example, a separate error-checking code for each block of encrypted data portion 324. These error-checking codes may also be associated with a Cyclical Redundancy Check (CRC) for the header 322 and/or the encrypted data portion 324. The header 322 includes a flag bit or signature 327 and security information 326 that is in accordance with the security template for the store. According to one embodiment, the security information 326 is encrypted and can be decrypted with a user key associated with an authenticated user.

The security information 326 can vary depending upon implementation. However, as shown in FIG. 3B, the security information 326 includes a user identifier (ID) 328, rules (access rules) 329, a file key 330 and other 331. Although multiple user identifiers may be used, a user identifier 328 is used to identify a user or a group of users that are permitted to access the secured file 320. The access rules 329 provide restrictive access to the encrypted data portion 324. The file key 330 is a cipher key that, once obtained, can be used to decrypt the encrypted data portion 324 and thus, in general, is protected. In one implementation of the structure 320, the file key 330 is encrypted in conjunction with the access rules 329. In another implementation of the structure 320, the file key 330 is double encrypted with a protection key and further protected by the access rules 329. The other 331 is an additional space for other information to be stored within the security information 326. For example, the other information 331 may be used to include other information facilitating secure access to the secured file, such as version number or author identifier. U. S. Patent Application No.:10/074,804 provides a description of an exemplary format of a secured file in accordance with the structure 320.

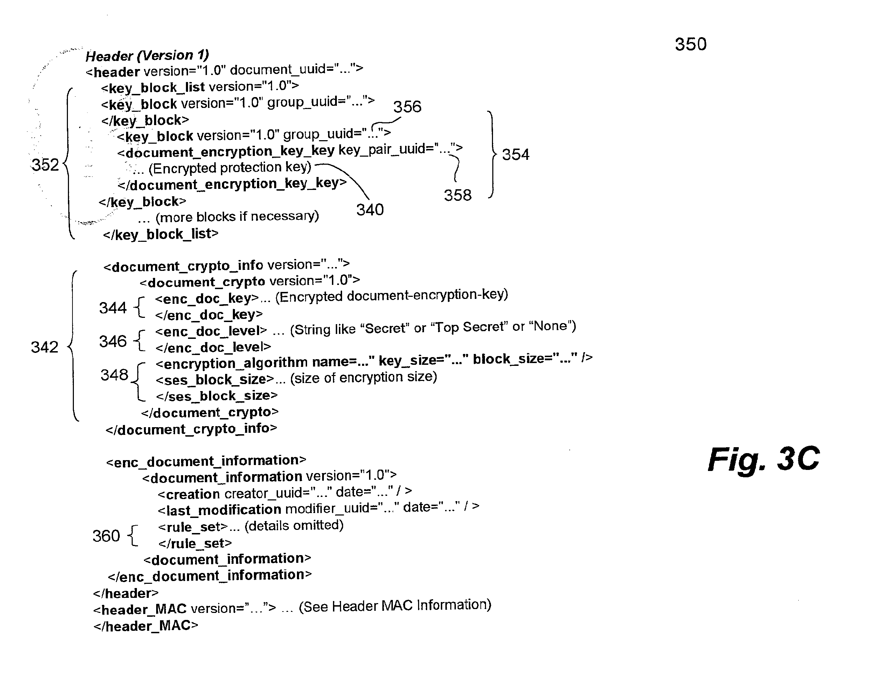

FIG. 3C shows an exemplary header structure 350 of a secured file according to one embodiment of the present invention. In general, a header of a secured file is a point of entry to the secured file. The header structure 350 includes various security information to ensure that only an authorized user with sufficient access privilege can access the encrypted data in the secured file. The security information is cryptographically protected or secured. In one embodiment, a good part of the header or the security information therein is protected by a Message Authentication Code (MAC) that can detect any tampering with the header by an unauthorized user without a valid key or CRC 316 of FIG. 3A.

One portion in the header structure 350 is referred to as a key block list 352 that may contain one or more key blocks. A key block 354 contains an encrypted protection key that is sometimes referred to as document/file-encryption-key key, namely a key to the file key. To ensure that the protection key is indeed protected, it is encrypted and can only be retrieved (e.g., decrypted) by a designated entity. For example, a secured file is created by a member of engineering group and permitted for full access by every member in the engineering group. The same secured file meanwhile is also permitted for limited access (e.g., only read and print) by every member in the marketing group. Accordingly, the key block list 352 may include two key blocks, one for the engineering group and the other for the marketing group. In other words, each of the two key blocks has an encrypted protection key that can be only accessed by a member of the corresponding group (via a group or individual private key).

The key block version value 356 provides necessary details of the encryption algorithm used to protect the protection key 340. In one embodiment, the RSA-OAEP (RSA - Optimal Asymmetric Encryption Padding) which is a public-key encryption scheme combining the RSA algorithm with the OAEP method is used. In particular, the uuid of the key pair 358 identifies a certificate and a private key (the details thereof are not shown) that are used to decrypt this value. In addition, attributes of the key pair, such as key length or versions , are also included to facilitate the protection of the protection key 340.

The block 342 of the header structure 350 includes at least three segments 344, 346 and 348. The segment 344 includes an encrypted file key that must be retrieved in order to decrypt the encrypted data portion. The segment 346 includes security level information to indicate what security level the secured file is at, for example, "top secret", "secret", "confidential" or "unclassified" or "none". The segment 348 includes information about the size of the encryption block for the encrypted data portion in the secured file. According to one embodiment, this is a multiple of the algorithm encryption block size. The encrypted data portion is created by encryption with a symmetric key that is called the document/file-encryption-key or file key herein.

There is another portion 360 of the header structure 350 that is encrypted by a user or group key. The portion 360 (the details thereof are not shown) contains essentially the access rules embedded with the secured file to govern who/where the secured file can be accessed. Various conditions of accessing the file can be placed or realized in the access rules.

In an alternative data structure for a secured file, the header can include at least one pointer which points to a remote data structure stored in a storage space. The remote data structure can store some or all of the security information, thereby shortening the size of the header and improving manageability of security information. The storage device is typically a local storage device. In other words, the alternative data structure and the remote data structure are typically stored on a common machine (e.g., desktop or portable computer). Additional details on the alternative data structure can be found in U.S. Application No. 10/132,712, filed April 26, 2002, and entitled "METHOD AND SYSTEM FOR PROVIDING MANAGEABILITY TO SECURITY INFORMATION FOR SECURED ITEMS," which is hereby incorporated herein by reference.

One advantage of setting up a protected place or a designated store is to provide a securing mechanism for users to create secured files without individually specifying as to who/how/when/where secured files can be accessed. However, in some situations, an authorized user with sufficient access privilege needs to revise the access policy in a secured file. For example, an engineering document originally created for access by members of an engineering group needs now to be accessed by members of a marketing team. According to one aspect of the present invention, when a secured file is deposited in a store having a different security template, the existing security information in the secured file will be superseded but not immediately overwritten. In other words, the displaced "old" security information is still preserved somewhere, thus providing the ability to "undo" the operation if desired.

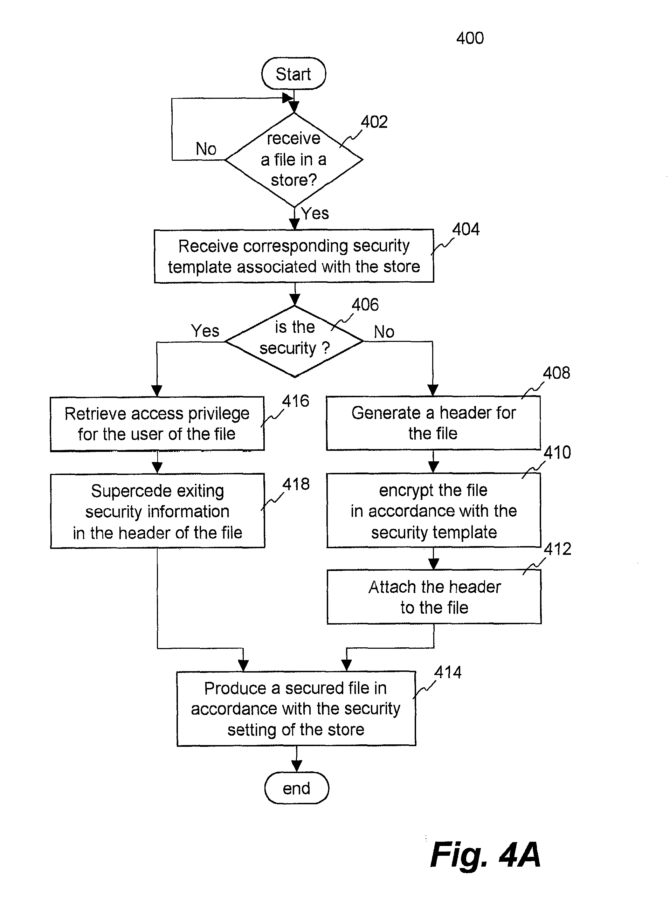

FIG. 4A shows a process flowchart 400 of securing a file that can be plain or secured. At 402, the process 400 determines whether a file is being deposited in a store. Once it is detected that a file is deposited in the store, the process 400 proceeds. The process 400 retrieves a security template for the store at 404. Since a file being deposited can be either plain or secured, the security nature of the file is determined at 406. When it is determined that the file is plain, namely it is non-secured, the process 400 goes through 408, 410, 412 and 414, each of which is respectively similar to 306, 308, 310, and 312 of FIG. 3A, and the description thereof is thus omitted and can be referred to the description of the same for FIG. 3A.

When it is determined that the file is secured, which indicates that the file deposited in the store is in a format or structure that includes a header while the header itself includes necessary security information controlling access thereto. To ensure that a user that has deposited the file has the privilege to revise the access policy of a secured file, the access privilege of the user is retrieved at 416. This determination is necessary to avoid a situation in which an unauthorized user lessens the access policy in a secured file by depositing it into a store that the unauthorized user is permitted to access. To facilitate the description of the process 400, it is assumed that the user of the file has the privilege to revise the current security information (e.g., access policy) embedded in the secured file. In general, an access privilege of a user is determined when the user logs onto a security system, which will be further described below.

At 418, the security information in the security template retrieved at 404 supersedes the current security information. As described above, to provide at least one level "undo" operation, the "current" security information that is being superseded is displaced somewhere but not necessarily deleted immediately. Once the new security information is in place, a secured file is generated at 414 in accordance with the security template associated with the store.

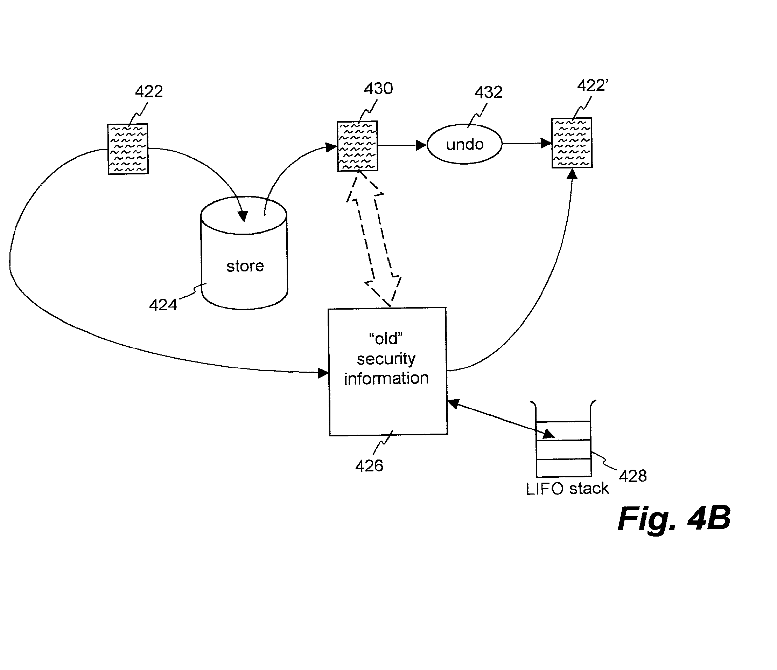

FIG. 4B illustrates how an existing security information is being superseded according to one embodiment of the present invention and may be implemented as 418 of FIG. 4A. A secured file 422 is being deposited by a user in a store 424. It is assumed that the user has the access privilege to revise the security information of the secured file 422. For example, a leader of an engineering team desires to have a marketing team to review an engineering document that had been only accessed by the members of the engineering team. For the marketing team to access this engineering document, the access policy of the file must be revised to include permitted access from the marketing team. It is assumed that the store 424 is indeed set up for access from both the engineering and marketing teams. Thus a simple deposit of the secured file 422 into the store 424 will achieve the revision of the access policy originally embedded in the secured file 422.

To make it possible to undo such revision if desired, the access control module associated with the store 424 is configured to copy the original security information 426 into an undo stack or a temporary memory space pointed by a pointer that is placed in a stack. In either case, the stack 428 operates as a last-in-first-out (LIFO) stack. Although the newly secured file 430 includes the security information in accordance with the security template associated with the store 424, the "old" security information 426 is preserved. When an "undo" operation is performed, the "old" security information 426 is provided and replaces the "new" security information in the secured file 430 so as to recover the "old" secured file 422 or produce a secured file in accordance with the "old" security information. In general, the LIFO memory is configured into K levels with the K-th level for storing the latest "old" security information, wherein K is a finite positive number. When another "old" security information is received in the LIFO memory, the old" security information is pushed down to the (K-1)-th layer and the K-th layer is used to preserve the another "old" security information. Likewise, when the content in the K-th layer is called up (i.e., used to replace the security information in a secured file), the content in the (K-1)-th layer is pushed up to the K-th layer.

In any case, regardless how a file (secured or plain) is secured in a store, the user who caused the file to be so secured is always granted full access to the secured file. This feature eliminates a situation in which the user accidentally deposited a file into a store that the user is not permitted to access and thus lost control of the file. Accordingly, when such situation happens, a separate set of access rules is created in the header to guarantee the user full Il access to the secured file. Generally, the separate set of access rules can be deleted or modified next time the security of the file is revised by another user.

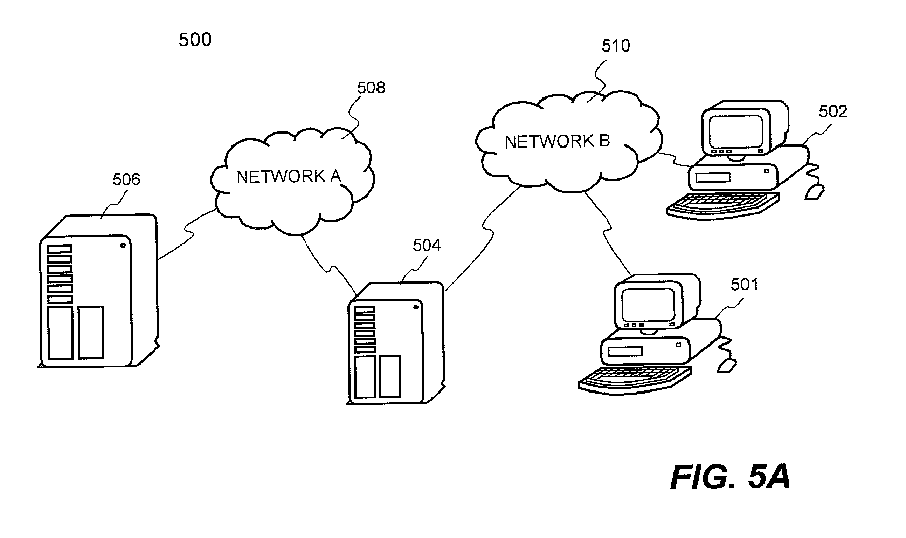

FIG. 5A shows a basic security system 500 in which the present invention may be practised in accordance with one embodiment thereof. The security system 500 may be employed in an enterprise or inter-enterprise environment. It includes a first server 506 (also referred to as a central server) providing centralized access management for the enterprise thus files secured in the security system 500 can be controlled for restrictive access. To provide the dependability, reliability and scalability of the system, one or more second servers 504 (also referred to as local servers of which one is shown) may be employed to provide backup or distributed access management for users or client machines serviced locally. For illustration purpose, there are two client machines 501 and 502 being serviced by a local server 504. Additional description of FIG. 5A may be provided in U. S. Patent Application No.:10/074,804.

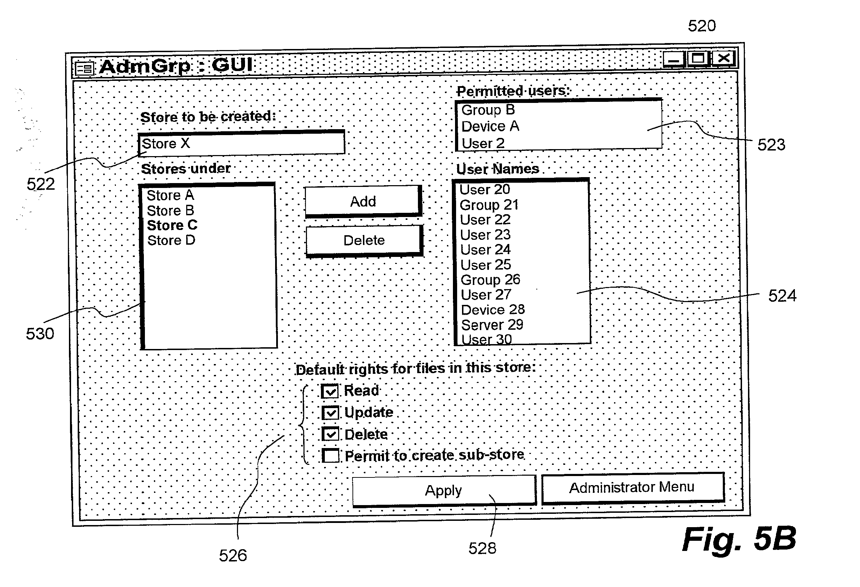

In general, there are a plurality of stores in the security system 500, each of the stores is created and used for securing files for one type of security needs and typically managed by the central server 502. FIG. 5B shows an exemplary graphic user interface 520 that can facilitate a system operator to create a desired store or view/modify characteristics of an existing store. Depending on the purpose of a store to be created, a specific name 522 may be provided, for example, "engineering" and "sales". As shown, a name "Store X" is entered at 522 for a folder to be created. A display 524 shows a list of users, groups and devices that are being serviced in the security system 500 and can be selectively chosen to be the potential users permitted to access the store (e.g., files in Store X). A panel 526 allows the system operator to determine what access privilege these selected users of the store may have. Depending on an exact implementation, these selected users may read (open), print, revise or delete the files in the store and some or all of the users may be able to revise the security of the files in the store or create sub-stores (e.g., sub-folders or directories) under the store. It should be noted that the panel 526 lists only exemplary actions. Those skilled in the art can appreciate that other desirable actions or privileges may be provided.

After the settings for the folder are satisfied, an activation of a button (e.g., "Apply" 528) or "enter" causes the folder to be created in accordance with the settings. According to one embodiment, the graphic user interface 520 can be accessed from an administration interface of a server module which is described in U. S. Patent Application No.:10/074,804. Likewise, all system-managed stores can be viewed in display 530. When a particular store in display 530 is selected, the display 523 shows the users currently privileged to the selected store. In addition, buttons "add" and "delete" or like can be used to facilitate the creating/changes of the system-managed stores.

In general, the parameters or settings of the stores are managed in a database maintained in the central server 506. To synchronize the stores with the client machines and to facilitate all applicable client machines to access the stores, the setting of the managed stores need to propagate to the applicable client machines once they are authenticated.

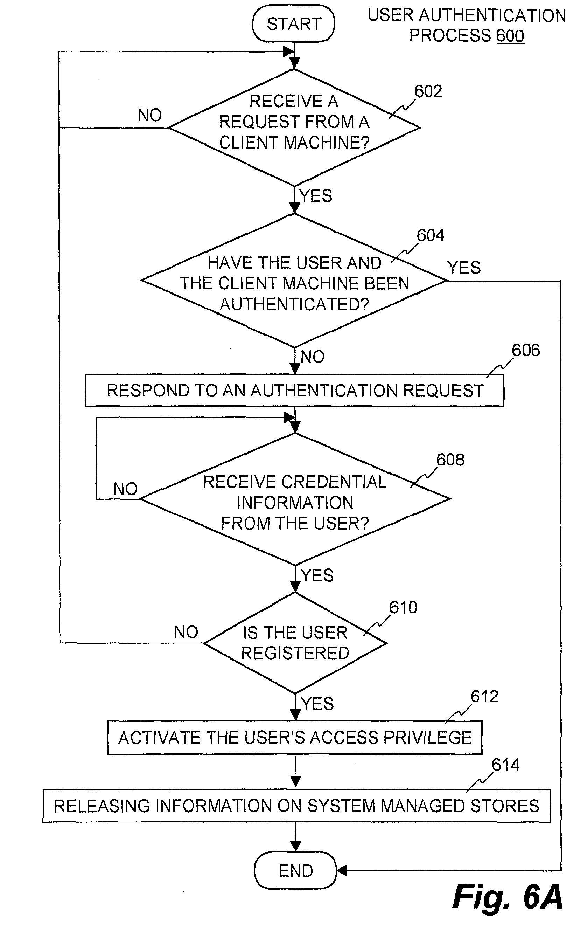

FIG. 6A shows a flowchart of a user authentication process 600 that may be implemented in the central server 506 or the local server 504 of FIG. 5A. Typically, there are at least two situations that will call upon the process 600, a user initially logins onto a networked client machine or for first time accesses a secured file. When either one of these situations happens, a client module in the client machine initiates a request that is transmitted to a server providing the access control management to start the process 600.

At 602, the server awaits the request. Upon receiving the request from the client machine, the server proceeds at 604 to determine if the user and/or the client machine from which the user attempts to access a secured file have been authenticated. If both have already been authenticated, there will be no more authentication processing for either of the user or the client machine. On the other hand, the authentication process 600 continues when the user and/or the client machine have not already been authenticated. In one embodiment, the server may initiate a secured link with the client machine if both the server and the client machine are coupled to an open network, such link may be over HTTPS, supported through VPN or other means. Alternatively, there may be a direct link between the client and the server if another authentication means is employed.

At 606, the server responds to the received request with an authentication response. Depending on implementation, such response may be a dialog box to be displayed on the screen of the client machine, a command or other demand. In any case, the response requires that credential information be provided by the user. In general, the credential information may be a set of username and password or biometric information of the user and must be received from the user at 608 before the authentication may proceed forward.

At 610, upon receiving the credential information, the server needs to determine if the user is an authorized one to access any secured files maintained in a repository, a local store, the server itself or other device accessible over the network. This may involve in a match of the received credential with what is previously stored in the server. It should be noted that the server may be a central server or a local server. Those skilled in the art can understand that the description is equally applied in either one of the settings. If the match fails, namely the user is not authorized, the process 600 goes back to the beginning to wait for a new request. In other words, the current request to access the secured files or login to the system is abandoned. If the match succeeds, the user is recognized as being authorized. At the same time, the client machine goes to a similar authentication by, perhaps, an IP address thereof, or a network card identification therein, or other means that uniquely identifies the client machine.

With the authentication of the user and/or the client machine, the process 600 goes to 612 where the user's access privilege is retrieved and activated. Depending on implementation, an activation of the user's access privilege may result in downloading of control parameters or a file containing the access privilege to the client machine, a decryption of a local file containing the access privilege, or simply an activation of the user's account in a memory space of the server. In any case, at this point, the user's access privilege is readily accessible, thus permitting the user to access the secured files from the authenticated client machine.

In the context of the present invention, information (e.g., store setting parameters) regarding the system-managed stores is downloaded to the client machine at 614 such that the user can access some or all of the stores managed by the server. According to one exemplary embodiment, XML-RPC is used to facilitate the communication between a server (e.g., a local server or a central server) and a client machine. XML-RPC is a simple and portable way to make remote procedure calls over HTTP. It can be used with Perl, Java, Python, C, C++, PHP and many other programming languages. In addition, XML-RPC allows software running on disparate operating systems, running in different environments to make procedure calls over a data network. It is remote procedure calling using HTTP as the transport and XML as the encoding. XML-RPC is designed to be as simple as possible, while allowing complex data structures to be transmitted, processed and returned. It is understood to those skilled in the art that other communication means or protocols are possible given the description herein.

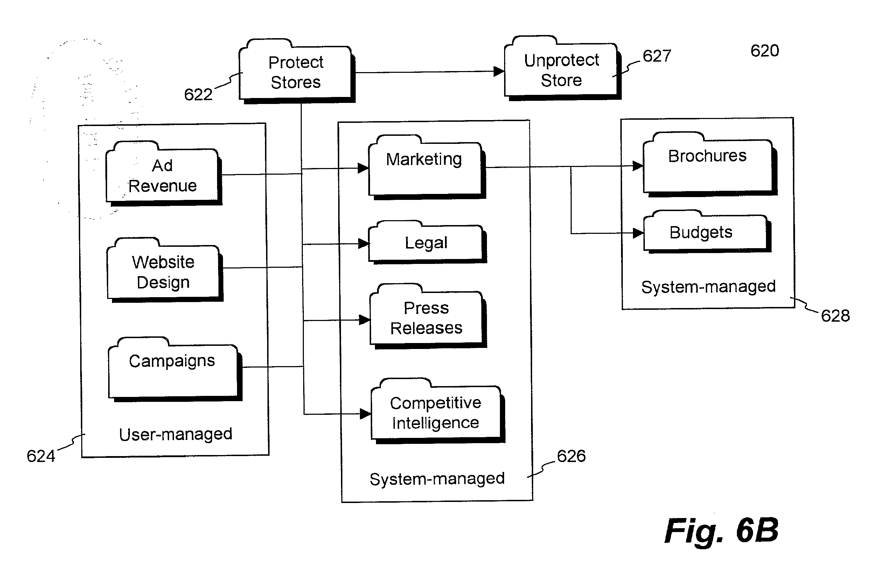

Essentially, the system-managed stores are created by a system administrator or a user with sufficient access privilege and managed in a server. The security for the stores can not be altered by users other than the administrator or a user with sufficient access privilege. In contrast to the system-managed stores, a client module in the client machine is configured to produce user-managed stores by users for the purpose of the users of the client machine. For example, a user of a client machine may want to create a local protected store for securing personal files. FIG. 6B shows an exemplary folder layout 620 according to one aspect of the present invention. A protected store root 622, although not necessary, is a convenient way to include a number of user-managed folders 624 and system-managed folders 626. Each of the user-managed folders 624 is locally created and managed by a user. The operations of the user-managed stores are similar to those system-managed stores except that they can be accessed by the user without the user or the client machine being authenticated with the server first. While each of the system-managed folders 626 are created and managed by the system, none of the folders 626 can be accessed without the user and/or the client machine being authenticated first by the server.

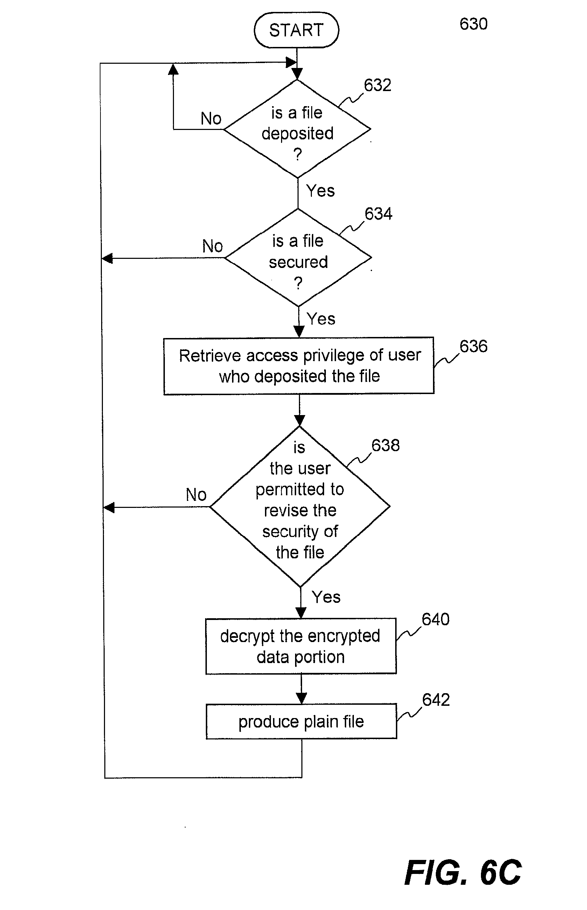

In addition, under the protected store root 622, there is a system-managed folder 624 that is used to unprotect secured files. The folder 624 may correspond to the store 112 of FIG. 1B. One of the purposes for such store is to provide a mechanism to conveniently remove all securities embedded in secured files. FIG. 6C shows a flowchart of removing security process 630. At 632, the process 630 determines whether a secured file has been deposited in the store. When a file is detected in the store, the process 630 proceeds forward. At 634, the deposited file is determined whether it is a secured file or just a plain file. The process 630 does nothing with regard to a plain file. When it is determined that the deposited file is secured, the process 630 goes to 636 to retrieve the access privilege of the user attempting (i.e., depositing) the file. As described above, the access privilege of the user is determined by the system when the user is authenticated with the server. In the case that this special store is also one of the user-managed stores, the user's authorization is assumed to be valid.

At 638, it is to determine whether the user is permitted to unsecure the secured file. This is usually done by retrieving an applicable set of access rules from the secured file and comparing the rules against the access privilege of the user. If the user is determined not to have the privilege to do so, the process 630 stops proceeding forward and instead returning to 632. Conversely, if the user is determined to have the privilege to do so, the process 630 goes forward to decrypt the data portion at 640, starting to recover the original plain file. A decrypted version of the secured file, a clean or plain file is thus reproduced at 642.

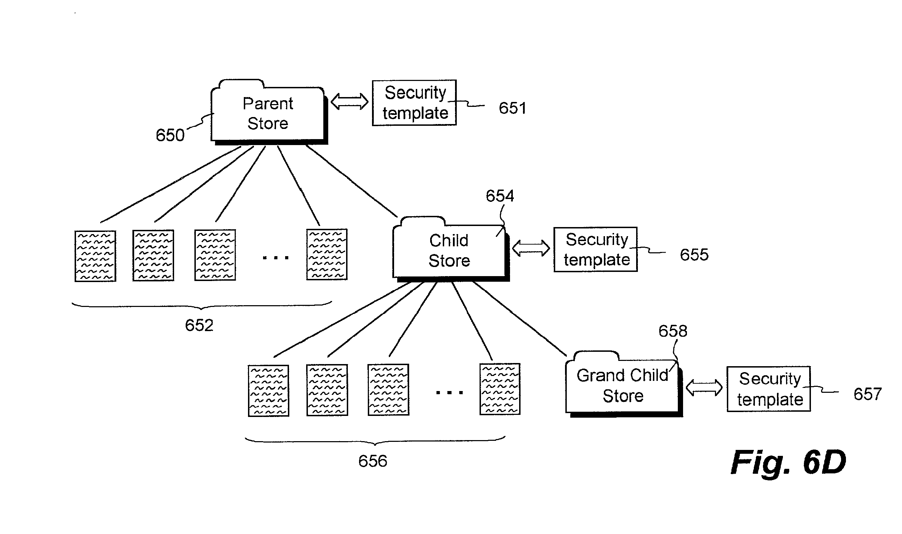

Regardless a designated store is system-managed or user-managed, there are needs to create sub-stores or child-stores under the designated store as shown in FIG. 6D, wherein a parent store 650 includes secured files 652 and one or more child-stores (only one 654 is shown). A child-store can also include secured files 656 and a number of grand child-stores 658. Since the parent store 650 is associated with a pre-determined security template 651, it is generally preferable that the security in the security template 655 for the child-store 654 is defined within the security for the parent store. In other words, the security for the child-stores can only be more restrictive than that of the parent store.

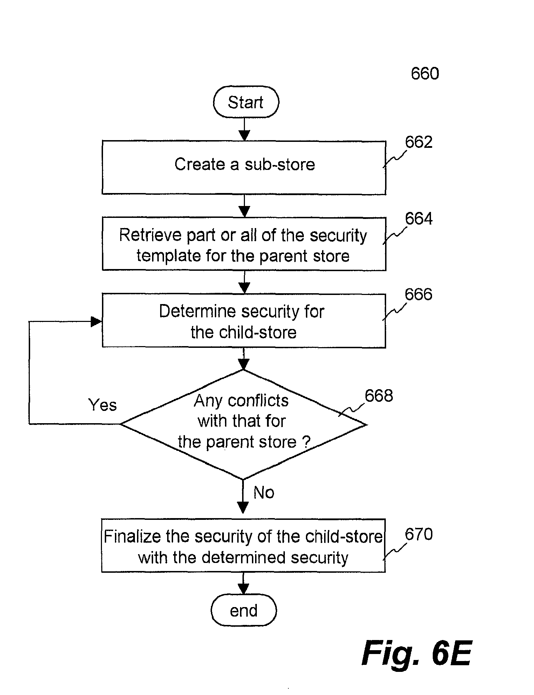

FIG. 6E shows a process flowchart 660 of creating child-stores under a parent store according to one embodiment of the present invention. The process 660 is applicable to both system-managed and user-managed stores. At 662, a sub-store is created by using, for example, tools commonly available in many operating systems. To ensure that the newly created sub-store is also secured, the security template for the parent store is retrieved at 664 and is associated with the newly created sub-store. In other words, the security of the sub-store is identical to that for the parent store by default. At 666, the security for the sub-store is determined. According to one embodiment, the security for the child-store is configured based on the retrieved security template. For example, it is permitted to take off certain items. If a list of authorized users permitted to access secured files in the parent store includes user A and user B, it is acceptable to narrow down the list to include only user A for the sub-store. In general, the security for the sub-store is more restrictive than that for the parent store.

At 668, the determined security template for the sub-store is checked to see if it is in conflict with that for the parent store in any way. If it is found that one item (e.g., a rule parameter) in the security template for the sub-store conflicts with the parent store, for example, the security thereof is loosened compared to the parent store, the process 660 goes back to 666 to require a modification of the security template for the sub-store. In one specification, the parent store is created to manage secured Microsoft Word documents for marketing and engineering teams. A sub-store is created to manage secured Microsoft Word and Powerpoint documents or to manage secured Microsoft Word for marketing and sales teams would not be permitted. On the other hand, if it is found that none of the items in the security template for the sub-store conflicts with that for the parent store, the sub-store is finalized at 670 and subsequently associated with the security template therefor. As a result, all files deposited in the sub-store will be secured in accordance with the security template for the sub-store.

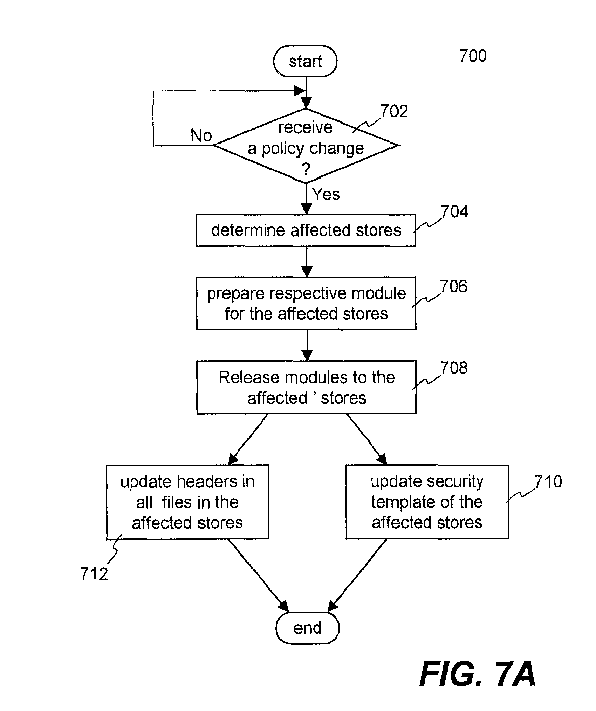

In an enterprise environment, changes to a security system are quite often. When there are changes (e.g., updates or revisions) pertaining to the system-managed stores, these changes must be timely propagated to those stores that are being affected. FIG. 7A shows a flowchart of delivering changes process 700 that may be implemented or executed in a local machine, a server or a distributed manner.

At 702, the process 700 awaits related policy changes. Commonly assigned co-pending US Patent Application No.: 10/186,203 entitled "Method and system for implementing changes to security policies in a distributed security system" provides descriptions of delivering policy changes in a security system, which is incorporated by reference. When a change pertaining to any of the system-managed store is received, the process 700 proceeds forward. First, based on the received change, it needs to determine how many of the system-managed stores are being affected by the change. For example, a change is received to remove an access permit previously given to a consulting team. According to one embodiment, each of the system-managed stores is looked up to determine how many of the stores are set up for allowing the access from the consulting group. There may be one or a few such stores that are now affected by the change. Accordingly, respective modules, preferably, each for one affected store, are prepared to carry out the policy change.

At 708, these modules are released or sent out to the devices that host the affected stores to proceed with effectuating the policy change with the stores. According to one embodiment, these modules are implemented as what is commonly referred to as "spiders" or "crawlers". Each of the spiders finds its way to the corresponding store and propagates the change to the store.

As described above, a security template is associated with each store. Accordingly, the security template needs to be updated with the change so that all subsequent files being deposited are secured in accordance with the latest security template. At 710, a security template with an affected store is updated. In the case that there are secured files in the affected store, these secured files shall be updated to reflect the change such that the security in these files are up to date. At 712, each of the secured files in the affected store, if there is any, is updated in accordance with the latest security template. Typically, many changes pertain to one or more access policies, thus only the headers in the secured files are actually revised.

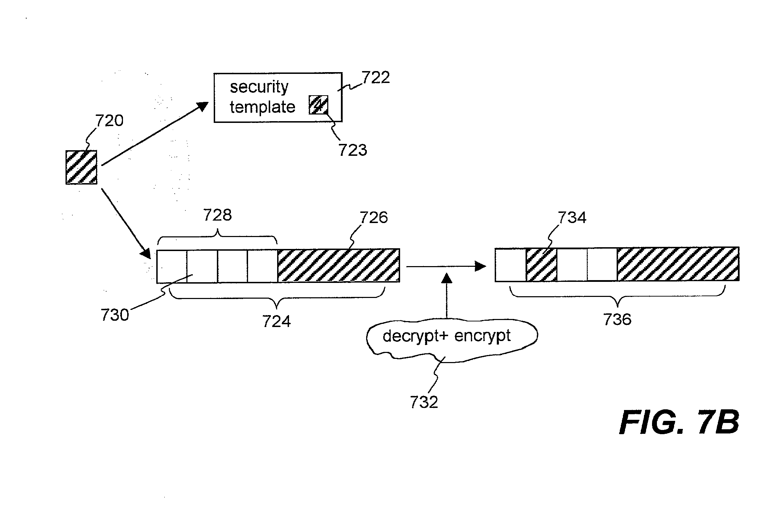

FIG. 7B illustrates that an update patch 720 (e.g., carried in a spider or pushed from a central server) is being propagated into an affected store associated with a security template 722 and including a secured file 724. The updated patch 720 can include, for example, a new set of access rules, a user key, or a protection key for a particular user or group. Preferably, a change in the updated patch is to replace or overwrite an affected part. As illustrated, the security template 722 is updated to include the resulting change 723. Meanwhile the secured file 724 is looked up for the corresponding change. It is assumed that a part 730 in the header 728 of the secured file 724 needs updating. According to an exemplary structure, the secured file 724 includes an encrypted data portion 726 and an encrypted version of the header 728. Thus to change anything in the header 728, a decryption and encryption process 732 for the header has to be carried out automatically. According to one embodiment, the access control module managing the store is activated to decrypt the header first and make the necessary changes to the header 728 and, finally, encrypt the header to reproduce the secured file 736 with the resulting change 734.

In one embodiment, the access control module is implemented as a filter operating in operating systems (e.g., Microsoft Windows) such that the operations thereof can be made transparently to users. Additional descriptions of the implementation of the access control module to operate in operating systems can be found in U.S. Patent Application No.:10/074,804.

The invention is preferably implemented by software or a combination of hardware and software, but can also be implemented in hardware. The invention can also be embodied as computer readable code on a computer readable medium. The computer readable medium is any data storage device that can store data which can thereafter be read by a computer system. The computer readable medium can also be distributed over network-coupled computer systems so that the computer readable code is stored and executed in a distributed fashion.

The various embodiments, implementations and features of the invention noted above can be combined in various ways or used separately. Those skilled in the art will understand from the description that the invention can be equally applied to or used in other various different settings with respect to various combinations, embodiments, implementations or features provided in the description herein.

The present invention has been described in sufficient details with a certain degree of particularity. It is understood to those skilled in the art that the present disclosure of embodiments has been made by way of examples only and that numerous changes in the arrangement and combination of parts may be resorted without departing from the spirit and scope of the invention as claimed. Accordingly, the scope of the present invention is defined by the appended claims rather than the foregoing description of embodiments.
Further aspects of the invention:
(1) A method for determining access to files via a designated store, the method comprising:-
   associating a security template with the store;
   retrieving the security template when a file is deposited in the store;
   encrypting the file in accordance with the security template to produce an encrypted data portion;
   generating a header to include security information from the security template; and integrating the header with the encrypted data portion to produce a secured file.
(2) A method according to Aspect (1), wherein the associating of the security template with the store includes providing the security template to a computing machine after one or both of the computing machine and a user thereof are authenticated.
(3) A method according to Aspect (1) or (2), wherein the security template is managed by a server machine coupled to the computing machine over a network.
(4) A method according to any preceding aspect, wherein the store is located in one of the computing machine, the server machine or a separate storage device.
(5) A method according to any preceding aspect, wherein the security information in the header is added at least a cipher key that, once obtained, can decrypt the encrypted data portion.
(6) A method according to Aspect (5), wherein the cipher key is encrypted and directly or indirectly protected by access rules.
(7) A method according to any preceding aspect, wherein the generating of the header to include the security information from the security template comprises:- copying the security information into the header from the security template; obtaining a cipher key, that, once obtained, can decrypt the encrypted data portion;
   and
   encrypting the cipher key to produce an encrypted version of the cipher key.
(8) A method according to Aspect (7), wherein the encrypted version of the cipher key is protected by the security information in the header of the secured file.
(9) A method for determining access to files via a designated store, the method comprising:-
   associating a security template with the store;
   retrieving the security template when a secured file is deposited by a user in the store, wherein the secured file includes a header and an encrypted data portion, the header including embedded security information controlling restrictive access to the encrypted data portion;
   evaluating the embedded security information from the header of the secured file against access privilege of the user to determine whether the user is permitted to revise the embedded security information of the secured file; and
   superseding the embedded security information with current security information from the security template after the user is determined to be permitted to revise the embedded security information of the secured file.
(10) A method according to Aspect (9), wherein the superseding of the embedded security information with the current security information comprises:- preserving the embedded security information in a temporary place; and
   replacing the embedded security information in the header of the secured file with the current security information.
(11) A method for determining access to files via a designated store, the method comprising:-
   associating a security template with the store;
   retrieving the security template when a secured file is deposited by a user in the store, wherein the secured file includes a header and an encrypted data portion, the header including embedded security information controlling restrictive access to the encrypted data portion;
   evaluating the embedded security information from the header of the secured file against access privilege of the user to determine whether the user is permitted to revise the embedded security information of the secured file; and
   after the user is determined to be permitted to revise the embedded security information of the secured file, evaluating current security information in the template to determine whether the user is permitted to access files in the store;
   after the user is determined not to be permitted to access the files in the store, adding a special access policy to the security information to be included in the header such that the user can still access the secured file secured in accordance with the security template associated with the store.
(12) A method according to Aspect (11), wherein the special access policy is deleted or revised after the secured file is secured again via another store with another security template.
(13) A system for determining access to files via a designated store, the system comprising:-
   a server machine providing management to the store, the server accessible by a first user to determine access policies for the store such that all secured files in the store have substantially similar security, wherein the store is associated with a security template;
   at least a client machine coupled to the server machine over a first network, after a user of the client machine is authenticated by the server machine, the client machine communicating with the server machine to activate the security template, if the security template is already in the client machine, or download the security template from the server, if the security template is not already in the client machine, and
   wherein unsecured files deposited by the user into the store are secured in accordance with the security template.
(14) A software product to be executed in a computer for determining access to files via a designated store, the software product comprising:-
   program code for associating a security template with the store;
   program code for retrieving the security template when a file is deposited in the store;
   program code for encrypting the file in accordance with the security template to produce an encrypted data portion;
   program code for generating a header to include security information from the security template; and
   program code for integrating the header with the encrypted data portion to produce a secured file.

## Claims

1. A method for determining access to files via a designated store, the method comprising:-
associating a decryption module with the store;
when a secured file is deposited by a user in the store, the secured file including a header and an encrypted data portion and the header including embedded security information controlling restrictive access to the encrypted data portion, evaluating the embedded security information from the header of the secured file against access privilege of the user to determine whether the user is permitted to unsecure the secured file;
after the user is determined to be permitted to unsecure the secured file, retrieving a file key from the header; and
decrypting the encrypted data portion to produce a plain file.
